# EUROPEAN PATENT APPLICATION

(11) **EP 2 881 789 A1**
(43) Date of publication of application: **10.06.2015**
(21) Application number: 14195078.2
(22) Date of filing: 27.11.2014
(51) Int. Cl.: G03B 21/20, G02B 7/18, H04N 9/31

(54) **Light source unit and projector**

(30) Priority: 06.12.2013 JP 2013252710
(71) Applicant: Funai Electric Co., Ltd., Daito-shi, Osaka 574-0013 (JP)
(72) Inventor: Takemoto, Seiji, Daito-shi Osaka 574-0013 (JP)
(74) Representative: Global IP Europe Patentanwaltskanzlei

(57) **Abstract**

A light source unit includes a light source component 10a-10c, at least one prism 12a-12c, and a prism support member 20. The prism has a top face, a bottom face and a side face on which light from the light source component is incident, and guides the light from the light source component along a light path. The prism support member supports the prism. The prism support member has a connector 26a-26b for connecting the prism. The bottom face of the prism and the connector of the prism support member are fixedly coupled together by welding such that the connector is located outside the light path.

## Description

### CROSS-REFERENCE TO RELATED APPLICATIONS

This application claims priority to Japanese Patent Application No. 2013-252710 filed on December 6, 2013. The entire disclosure of Japanese Patent Application No. 2013-252710 is hereby incorporated herein by reference.

### BACKGROUND

### Field of the Invention

The present invention generally relates to a light source unit and a projector. More specifically, the present invention relates to a light source unit and a projector having a prism and a prism support member that supports the prism in a fixed position. Background Information

Prism devices having a prism and a prism support member that supports the prism in a fixed position are known in the art (see Japanese Laid-Open Patent Application Publication No. 2012-2873 (Patent Literature 1), for example).

The above-mentioned Patent Literature 1 discloses a prism device having a prism and a support member to which the prism is bonded with an adhesive agent.

### SUMMARY

However, with the prism device discussed in the above-mentioned Patent Literature 1, when the prism is fixed with the adhesive agent, the effect of temperature changes in the external environment can cause the adhesive to undergo thermal expansion or contraction, which causes the optical parts to swell or be compressed. More specifically, thermal expansion or contraction of the adhesive can bring about changes in the position of the prism with respect to the prism support member, which results in that the light guided by the prism ends up deviating from the desired direction, and as a result, the optical characteristics of the prism deteriorate. In particular, when the side face of the prism where the light incidence face is provided is fixed by the adhesive, thermal expansion or contraction of the adhesive is more likely to bring about changes in the optical path, leading to deterioration in the optical characteristics of the prism.

One aspect is to provide a light source unit and a projector with which there is less deterioration of the optical characteristics of the prism caused by changes in temperature.

In view of the state of the known technology, a light source unit includes a light source component, at least one prism, and a prism support member. The prism has a top face, a bottom face and a side face on which light from the light source component is incident, and guides the light from the light source component along a light path. The prism support member supports the prism. The prism support member has a connector for connecting the prism. The bottom face of the prism and the connector of the prism support member are fixedly coupled together by welding such that the connector is located outside the light path.

Also other objects, features, aspects and advantages of the present disclosure will become apparent to those skilled in the art from the following detailed description, which, taken in conjunction with the annexed drawings, discloses selected embodiments of the light source unit and the projector.

### BRIEF DESCRIPTION OF THE DRAWINGS

Referring now to the attached drawings which form a part of this original disclosure:
FIG. 1 is a block diagram of the overall configuration of a projector in accordance with a first embodiment;
FIG. 2 is a exploded perspective view of the overall configuration of a laser diode (LD) unit in accordance with the first embodiment;
FIG. 3 is a top plan view of the overall configuration of the laser diode unit in accordance with the first embodiment;
FIG. 4 is a cross sectional view of the laser diode unit, taken along 50-50 line in FIG. 3;
FIG. 5 is a top plan view of the overall configuration of a laser diode (LD) unit in accordance with a second embodiment; and
FIG. 6 is a top plan view of the overall configuration of a laser diode (LD) unit in accordance with a third embodiment.

### DETAILED DESCRIPTION OF EMBODIMENTS

Selected embodiments will now be explained with reference to the drawings. It will be apparent to those skilled in the art from this disclosure that the following descriptions of the embodiments are provided for illustration only and not for the purpose of limiting the invention as defined by the appended claims and their equivalents.

### FIRST EMBODIMENT

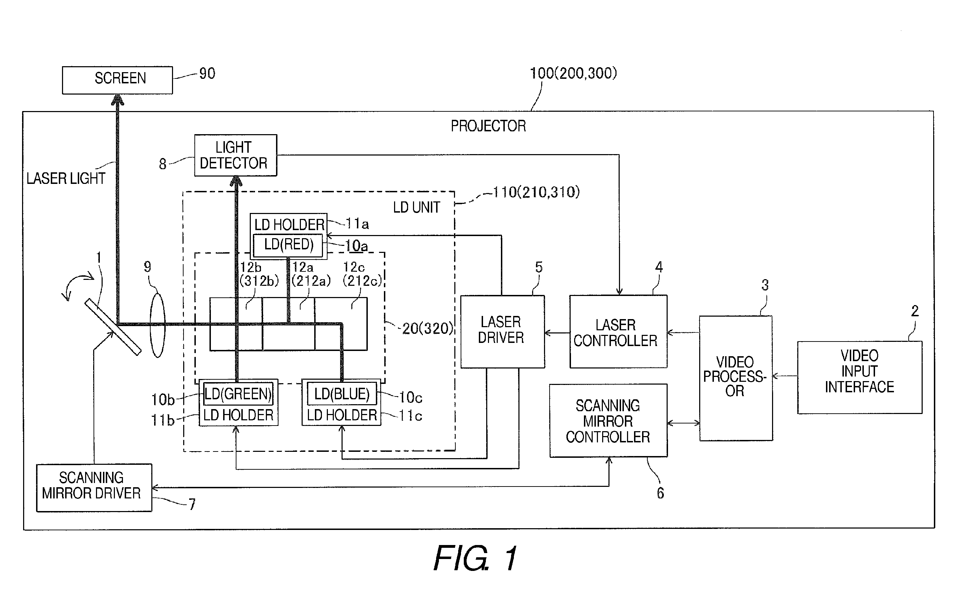

Referring initially to FIGS. 1 to 4, a projector 100 is illustrated in accordance with a first embodiment.

As shown in FIG. 1, the projector 100 in accordance with the first embodiment basically includes a laser diode unit 110 that combines and outputs red, green, and blue laser light, and a scanning mirror 1 that scans the light outputted from the laser diode unit 110 and shines it onto a screen 90. Laser light is an example of the "light" of the present invention. The laser diode unit 110 is an example of the "light source unit" of the present invention. The scanning mirror 1 is an example of the "scanner" of the present invention.

First, the configuration of the laser diode unit 110 of the projector 100 will be described through reference to FIGS. 1 to 4.

As shown in FIGS. 1 to 3, the laser diode unit 110 includes a plurality of (three in FIG. 1) laser diodes 10a to 10c, a plurality of (three in FIG. 1) laser diode holders 11a to 11c that respectively support the laser diodes 10a to 10c, a plurality of (three in FIG. 1) optical prisms 12a to 12c that are made of glass, and a plastic prism support member 20 that supports the three prisms 12a to 12c and to which the three laser diodes 10a to 10c are attached. The prisms 12a to 12c are integrally connected to the prism support member 20 by welding using a laser beam. This means that the prisms 12a to 12c are supported in a fixed manner by the prism support member 20. The laser diodes 10a to 10c are an example of the "light source component" of the present invention.

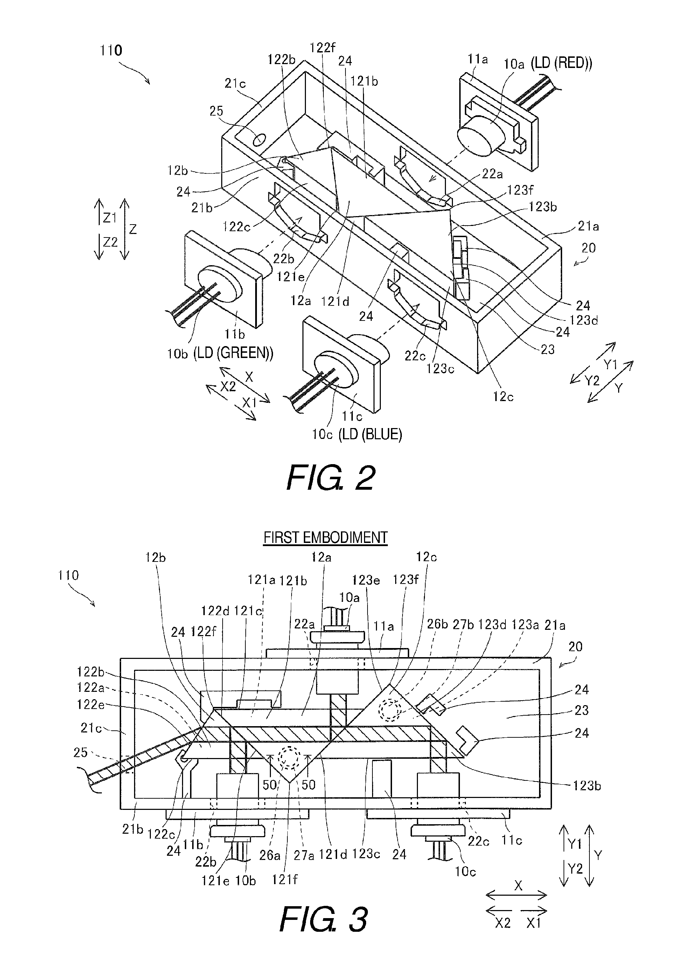

The laser diode 10a outputs or emits a red laser beam. As shown in FIGS. 2 and 3, the laser diode 10a is fixedly attached via the laser diode holder 11a to a hole 22a that is provided to a side wall 21a of the prism support member 20. The laser diode 10b outputs or emits a green laser beam. The laser diode 10b is also fixedly attached via the laser diode holder 11b to a hole 22b that is provided to a side wall 21b of the prism support member 20. The laser diode 10c outputs or emits a blue laser beam. The laser diode 10c is also fixedly attached via the laser diode holder 11c to a hole 22c that is provided to the side wall 21b of the prism support member 20. In the illustrated embodiment, the side walls 21a and 21b face opposite each other.

As shown in FIGS. 2 and 3, the prisms 12a to 12c combine the red, green, and blue laser beams by reflecting and transmitting the laser beams from the laser diodes 10a to 10c, respectively. The prisms 12a to 12c are each in the form of a triangular prism. The prisms 12a to 12c are positioned with respect to the prism support member 20 by positioning components 24, respectively, that extend in the Z1 direction from a face 23 (inside bottom face) of the prism support member 20. The prisms 12a to 12c are disposed so as to be arranged in the order of the prisms 12c, 12a, and 12b, from the X1 direction side to the X2 direction side. The prisms 12a to 12c are integrally connected to each other. Also, the prisms 12a and 12c are formed in the same size, while the prism 12b is formed smaller than the prisms 12a and 12c. In the illustrated embodiment, the prisms 12a to 12c are fixedly coupled with each other. In other words, the prisms 12a to 12c are independently formed as separate members, and fixedly coupled with each other with adhesive or in a manner suitable for an optical element.

As shown in FIGS. 2 and 3, the prism 12a has a triangular bottom face 121a (the face on the Z2 direction side), a top face 121b (the face on the Z1 direction side), and three side faces 121c to 121e. The prism 12a is disposed on the Y2 direction side of the laser diode 10a so that the side face 121c faces opposite the laser diode 10a. The prism 12a is configured so that the red laser beam outputted from the laser diode 10a is incident from the side face 121c. The prism 12a is also configured so that the red laser beam is reflected in the X2 direction by the side face 121d. The apex 121f opposite the side face 121c of the prism 12a is disposed at a position that is outside the path of the laser beam (a position on the Y2 direction side of the path of the laser beam).

The prism 12b has a triangular bottom face 122a (the face on the Z2 direction side), a top face 122b (the face on the Z1 direction side), and three side faces 122c to 122e. The prism 12b is disposed on the Y1 direction side of the laser diode 10b so that the side face 122c faces opposite the laser diode 10b. The prism 12b is configured so that the green laser beam outputted from the laser diode 10b is incident from the side face 122c. The prism 12b is also configured so that the green laser beam is reflected in the X2 direction by the side face 122d. The apex 122f opposite the side face 122c of the prism 12b is disposed at a position that is outside the path of the laser beam (a position on the Y1 direction side of the path of the laser beam).

The prism 12c has a triangular bottom face 123a (the face on the Z2 direction side), a top face 123b (the face on the Z1 direction side), and three side faces 123c to 123e. The prism 12c is disposed on the Y1 direction side of the laser diode 10c so that the side face 123c faces opposite the laser diode 10c. The prism 12c is configured so that the blue laser beam outputted from the laser diode 10c is incident from the side face 123c. The prism 12c is also configured so that the blue laser beam is reflected in the X2 direction by the side face 123d. The apex 123f opposite the side face 123c of the prism 12c is disposed at a position that is outside the path of the laser beam (a position on the Y1 direction side of the path of the laser beam).

The side face 121d of the prism 12a and the side face 123e of the prism 12c transmits the blue laser light. The side face 121e of the prism 12a and the side face 122d of the prism 12b transmits the laser light obtained by combining the red and blue laser lights. The side face 122e of the prism 12b transmits the laser light obtained by combining the red, green, and blue laser lights. The side face 122e of the prism 12b polarizes the combined laser light in a specific direction so that this light passes through a hole 25 that is formed in the prism support member 20, thereby outputting the laser light to the outside of the laser diode unit 110. In the illustrated embodiment, the hole 25 is formed in a side wall 21c that extends between the side walls 21a and 21b of the prism support member 20.

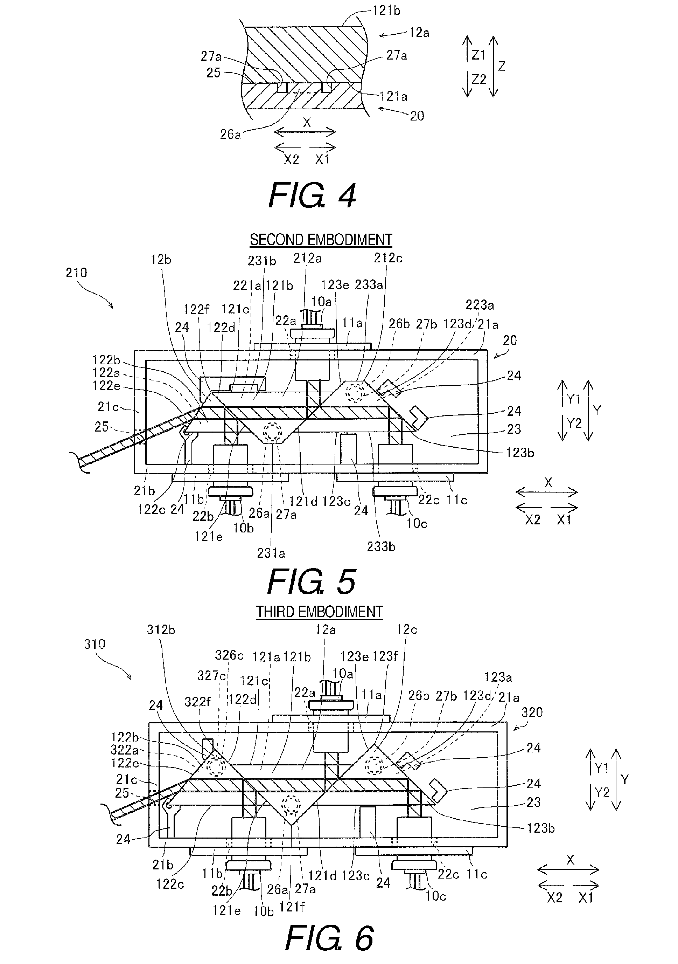

As shown in FIG. 3, in the first embodiment, connectors 26a and 26b are formed on the face 23 of the prism support member 20. These connectors 26a and 26b are respectively welded to the bottom faces 121a and 123a of the prisms 12a and 12c. As shown in FIG. 3, the connectors 26a and 26b are also formed at positions that are outside of the path of laser light on the face 23 in plan view (when seen from the Z1 direction side). More specifically, the connectors 26a and 26b of the prism support member 20 are respectively provided near the triangular apexes 121f and 123f of the prisms 12a and 12c that protrude in the Y direction from the region where the prisms 12a and 12c overlap with the path of the laser light in plan view. As shown in FIGS. 3 and 4, ring-shaped concave components 27a and 27b that are circular and surround the connectors 26a and 26b are respectively provided to the prism support member 20 near the connectors 26a and 26b. In other words, the connectors 26a and 26b are cylindrical portions formed on the face 23 by the circular ring-shaped concave components 27a and 27b, and the connector 26a (26b) and the concave component 27a (27b) are formed concentrically.

The overall configuration of the projector 100 will now be described through reference to FIG. 1.

In addition to the above-mentioned scanning mirror 1 and the laser diode unit 110, the projector 100 further includes a video input interface 2, a video processor 3, a laser controller 4, a laser driver 5, a scanning mirror controller 6, a scanning mirror driver 7 that drives the scanning mirror 1, and a light detector 8 that senses the gradation of the laser beams of each color (red, blue, and green). A lens 9 is also provided, in addition to the laser diode unit 110, as the optical system of the projector 100. The projector 100 is configured so that a video image inputted via the video input interface 2 is projected onto the screen 90.

The video processor 3 is configured so that video signal data is sent at specific time intervals to the laser controller 4 based on the inputted video signals. This makes it possible for the laser controller 4 to recognize pixel (picture element) information at specific scanning locations.

The scanning mirror 1 is a compact oscillating mirror element that is driven by the scanning mirror driver 7, and that can oscillate at a specific deflection angle. The scanning mirror 1 is configured so that an image is projected onto the screen 90 by scanning the laser beams emitted from the laser diode unit 110. The scanning mirror controller 6 is configured to control the scanning mirror driver 7 based on pixel information at a specific scanning location recognized by the video processor 3. Specifically, the scanning mirror 1 is configured to oscillate so that the laser beams of different colors are scanned in a zigzag pattern over the entire projection range, under control by the scanning mirror controller 6.

The light detector 8 is configured to allow the various colors (red, blue, and green) of laser light from the laser diodes 10a to 10c to be detected by a component or sensor (not shown) of the laser diode unit 110. The light detector 8 is also connected to the laser controller 4, and outputs the detected gradation of the laser lights to the laser controller 4. The laser controller 4 also compares the pixel information at the scanning location and determines, based on the gradation inputted from the light detector 8, whether or not the gradation is correct. If the gradation is not correct, then the output (brightness) of the laser diodes 10a to 10c is adjusted to achieve the correct gradation. The laser driver 5 drives the laser diodes 10a to 10c to emit the laser lights from the laser diodes 10a to 10c based on image signals from the video processor 3.

The lens 9 is configured so that the laser light outputted from the laser diode unit 110 is incident on it. The lens 9 also functions to align the optical axes of the red, blue, and green laser beams to create a laser beam having a specific gradation. The laser beams whose optical axes have been aligned by the lens 9 are outputted toward the scanning mirror 1. Basically, the above-mentioned configurations of the projector 100, except for the laser diode unit 110, can be conventional. Thus, detailed descriptions of the configurations will be omitted for the sake of brevity. In the illustrated embodiment, the video processor 3, the laser controller 4, and the scanning mirror controller 6 can each include a microcomputer, an integrated circuit and the like. Specifically, they can can also include other conventional components such as an input interface circuit, an output interface circuit, and storage devices such as a ROM (Read Only Memory) device and a RAM (Random Access Memory) device. Also, the laser driver 5 and the scanning mirror driver 7 can each include an integrated circuit.

Next, the method for welding the prism 12a (12c) to the prism support member 20 will be described.

The glass prism 12a and the plastic prism support member 20 have different melting points. Thus, it is difficult for them to be integrally connected by merely welding in which the interface between the glass and the plastic is directly irradiated with a laser beam. In view of this, first the bottom face 121a of the glass prism 12a is coated with a silane coupling agent to modify the surface state of the bottom face 121a. The prisms 12a to 12c are prepared ahead of time in a state of being connected to each other. Of course, the glass prism 12a can be coupled to the plastic prism support member 20 in a different manner.

Next, the bottom face 121a of the prism 12a whose surface state has been modified is brought into contact with the face 23 of the prism support member 20. As shown in FIGS. 2 and 3, when the prism 12b is pressed against the Y-shaped positioning components 24 on the X2 direction side, this disposes the prism 12a at a specific location where the welding is to be performed.

Then, a welding laser beam is directed from the Z1 direction side toward the connector 26a of the prism support member 20, in the Z2 direction that is perpendicular to the face 23. As shown in FIG. 3, in plan view, the connector 26a is provided at a location that is outside the path of the projection-use laser beam guided through the prism 12a on the face 23. Thus, the welding-use laser beam is directed at a position (the connector 26a) outside the path of the projection-use laser beam guided through the prism 12a. Consequently, the bottom face 121a of the prism 12a and the connector 26a of the prism support member 20 are welded together. For the prism 12c, the bottom face 123a of the prism 12c and the connector 26b of the prism support member 20 are also welded together in a manner similar to the prism 12a. Thus, in the illustrated embodiment, the connectors 26a and 26b of the prism support member 20 are offset relative to the path of the projection-use laser beam (e.g., the light path) as viewed in the Z direction perpendicular to the bottom face 121a or 123a.

As described above, the prisms 12a to 12c are fixedly coupled with each other. Specifically, as shown in FIG. 3, the prisms 12a to 12c are arranged with respect to each other along the path of the laser beam such that a part of one of the prisms 12a (12c) is disposed away from the path of the laser beam with respect to the side face 122c or 123c (121c) of the other one of the prisms 12b or 12c (12a) in the Y direction perpendicular to the path of the laser beam. Also, one of the connectors 26a (26b) is arranged with respect to the one of the prisms 12a (12c) such that the one of the connectors 26a (26b) at least partially overlaps with the part of the one of the prisms 12a (12c).

The following effects can be obtained with the first embodiment.

As discussed above, in the first embodiment, the bottom faces 121a and 123a of the prisms 12a and 12c are welded to the connectors 26a and 26b of the prism support member 20 at locations outside the path of the laser light from the laser diodes 10a to 10c. Therefore, compared to when the prism and the prism support member are bonded together with an adhesive agent, the positions of the prisms 12a to 12c with respect to the prism support member 20 tend not to be affected by temperature changes. Thus, the laser light guided by the prisms 12a to 12c is less likely to deviate from the desired direction. As a result, there is less deterioration of the optical characteristics of the prisms 12a to 12c due to temperature changes. In particular, since the prisms 12a and 12c are welded to the prism support member 20 at the bottom faces 121a and 123a, respectively, there is less change in the positions of the prisms 12a to 12c with respect to the prism support member 20 in directions parallel to the bottom faces 121a to 123a of the prisms 12a to 12c. Specifically, it is less likely that there will be a change in the positions of the side faces 121c to 123c where the laser light incident faces of the prisms 12a to 12c are provided, respectively. As a result, the path of the laser light will be less likely to change due to a change in the position of the laser light incident faces of the prisms 12a to 12c.

As discussed above, in the first embodiment, the concave components 27a and 27b are provided near or about the connectors 26a and 26b of the prism support member 20, respectively. Consequently, since the concave components 27a and 27b are provided near the connectors 26a and 26b of the prism support member 20, respectively, any thermal expansion during the welding of the connectors 26a and 26b of the prism support member 20 will be less likely to reach the area around the connectors 26a and 26b beyond the concave components 27a and 27b because of the concave components 27a and 27b. As a result, it will be less likely that there will be a change in the positions of the prisms 12a to 12c with respect to the prism support member 20.

As discussed above, in the first embodiment, the concave components 27a and 27b are each formed in a ring shape that surrounds the connectors 26a and 26b of the prism support member 20. Consequently, the ring-shaped concave components 27a and 27b make it less likely that the effect of thermal expansion during welding of the connectors 26a and 26b of the prism support member 20 will reach the area around the connectors 26a and 26b. Thus, there will be even less change in the positions of the prisms 12a to 12c with respect to the prism support member 20.

As discussed above, in the first embodiment, the prisms 12a and 12c are formed in the shape of a polyhedral prism, and the connectors 26a and 26b of the prism support member 20 are provided near the apexes 121f and 123f of the polyhedral shapes that are located outside the path of the laser light. Consequently, since the prisms 12a and 12c are welded near the apexes 121f and 123f of the polyhedral shapes that are located outside the path of the laser light, less of a region needs to be ensured in the prisms 12a and 12c for welding outside of the laser light path.

As discussed above, in the first embodiment, the prisms 12a to 12c are formed in a triangular prism shape in which the bottom faces 121a and 123a are triangular, and the connectors 26a and 26b of the prism support member 20 are provided near the apexes 121f and 123f of the triangular prisms 12a and 12c that protrude from the region where the prisms 12a and 12c overlap with the path of the laser light. Consequently, since the prisms 12a and 12c are welded near the apexes 121f and 123f of the triangular prism shapes, the welding region of the prisms 12a and 12c outside of the laser light path can be made smaller.

As discussed above, in the first embodiment, the prisms 12a to 12c are made of glass, and the prism support member 20 is made of plastic. This allows the prisms 12a to 12c to be constituted by glass, which is well suited to optical parts. And the prism support member 20 can be constituted by plastic, which is easy to mold.

### SECOND EMBODIMENT

Referring now FIGS. 1 and 5, a projector 200 in accordance with a second embodiment will now be explained. In view of the similarity between the first and second embodiments, the parts of the second embodiment that are identical to the parts of the first embodiment will be given the same reference numerals as the parts of the first embodiment. Moreover, the descriptions of the parts of the second embodiment that are identical to the parts of the first embodiment may be omitted for the sake of brevity.

With this second embodiment, unlike in the first embodiment in which all of the prisms 12a to 12c of the laser diode unit 110 are in the shape of triangular prisms, one prism 12b of a laser diode unit 210 is formed in the shape of a triangular prism, while the other two prisms 212a (a prism disposed opposite the red laser diode 10a) and 212c (a prism disposed opposite the blue laser diode 10c) are formed in the shape of tetragonal prisms. The laser diode unit 210 is an example of the "light source unit" of the present invention.

As shown in FIG. 5, the laser diode unit 210 in accordance with the second embodiment includes the tetragonal prism 212a in which a bottom face 221a has a trapezoidal shape having a top edge (e.g., an upper edge) 231a and a bottom edge (e.g., a lower edge) 231b, and the tetragonal prism 212c in which a bottom face 223a has a trapezoidal shape having a top edge (e.g., an upper edge) 233a and a bottom edge (e.g., a lower edge) 233b. The prisms 212a and 212c are formed in the same size. In the illustrated embodiment, the top edges 231a and 233a are shorter than the bottom edges 231b and 233b, respectively. Also, the prism 212a (212c) is oriented relative to a prism support member 20 such that the top and bottom edges 231a and 231b (233a and 233b) extend parallel to the path of the laser light. Also, in the illustrated embodiment, as shown in FIG. 5, the bottom faces 221a and 223a (or top faces) are isosceles trapezoid. However, the bottom faces 221a and 223a (or top faces) can be a different shape (e.g., a different trapezoid), as needed and/or desired.

Also, the prism 212a (212c) is welded to the prism support member 20 so that the top edge 231a (233a) and the bottom edge 231b (233b) extend in a direction that is substantially parallel to the path of the laser light. Also, the prism 212a (212c) is formed so as to be disposed at a position where the top edge 231a (233a) side protrudes in the Y direction from the path of the laser light. The connectors 26a and 26b of the prism support member 20 are provided near the top edges 231a and 233a of the prisms 212a and 212c, respectively. In the illustrated embodiment, the prisms 212a and 212c are welded to the prism support member 20 in the same manner as described in the first embodiment. Specifically, in the illustrated embodiment, the connectors 26a and 26b of the prism support member 20 are offset relative to the path of the laser light as viewed in the Z direction perpendicular to the bottom face 221a or 223a.

As described above, the prisms 212a, 12b and 212c are fixedly coupled with each other. Specifically, as shown in FIG. 5, the prisms 212a, 12b and 212c are arranged with respect to each other along the path of the laser beam such that a part of one of the prisms 212a (212c) is disposed away from the path of the laser beam with respect to the side face 122c or 123c (121c) of the other one of the prisms 12b or 212c (212a) in the Y direction perpendicular to the path of the laser beam. Also, one of the connectors 26a (26b) is arranged with respect to the one of the prisms 212a (212c) such that the one of the connectors 26a (26b) at least partially overlaps with the part of the one of the prisms 212a (212c).

The rest of the configuration in the second embodiment is the same as in the first embodiment above.

The following effects can be obtained with the second embodiment.

As discussed above, in the second embodiment, the bottom faces 221a and 223a of the prisms 212a and 212c are welded to the connectors 26a and 26b of the prism support member 20 at positions outside the path of laser light coming from the laser diodes 10a to 10c. This makes it less likely that temperature changes will cause deterioration of the optical characteristics of the prisms 212a, 12b, and 212c, just as in the first embodiment.

As discussed above, in the second embodiment, the prisms 212a and 212c are formed in a tetragonal shape in which the bottom faces 221a and 223a have trapezoidal shapes having the top edges 231a and 233a and the bottom edges 231b and 233b, respectively. Also, the connectors 26a and 26b of the prism support member 20 are provided near the top edges 231a and 233a of the trapezoid of the prisms 212a and 212c that protrude from the region where the laser light path overlaps with the prisms 212a and 212c. Consequently, since the prisms 212a and 212c are welded near the top edges 231a and 233a of the trapezoidal bottom faces 221a and 223a, less of a region needs to be ensured in the prisms 212a and 212c for welding outside of the laser light path.

The other effects of the second embodiment are the same as those in the first embodiment above.

### THIRD EMBODIMENT

Referring now FIGS. 1 and 6, a projector 300 in accordance with a third embodiment will now be explained. In view of the similarity between the first and third embodiments, the parts of the third embodiment that are identical to the parts of the first embodiment will be given the same reference numerals as the parts of the first embodiment. Moreover, the descriptions of the parts of the third embodiment that are identical to the parts of the first embodiment may be omitted for the sake of brevity.

With this third embodiment, unlike in the first embodiment in which only the prisms 12a and 12c of the laser diode unit 110 are welded to a prism support member 20, all of prisms 12a, 312b, and 12c of a laser diode unit 310 are welded to a prism support member 320. The laser diode unit 310 is an example of the "light source unit" of the present invention.

As shown in FIG. 6, the laser diode unit 310 in accordance with the third embodiment includes the prism 312b and the prism support member 320. Also, the apex 322f of the prism 312b is disposed at a position that is outside the path of a laser light (a position protruding to the Y1 direction side from the path of laser light). The prisms 12a and 12b are the same as in the first embodiment above, so they will not be described again here.

A connector 326c that is welded to a bottom face 322a of the prism 312b is provided to the prism support member 320 at a position that is outside the path of laser light on the face 23 in the plan view. More specifically, as shown in FIG. 6, the prism support member 320 is provided with the connector 326c near the apex 322f of the triangle of the prism 312b that protrudes in the Y1 direction from the region where the laser light path and the prism 312b overlap in the plan view (as seen from the Z1 direction side). A circular ring-shaped concave component 327c that surrounds the connector 326c is provided to the prism support member 320 near the connector 326c. The prism 312b is formed larger than the prism 12b in the first embodiment in order to provide the connector 326c.

In the illustrated embodiment, the prisms 12a, 12c and 312b are welded to the prism support member 20 in the same manner as described in the first embodiment. Specifically, in the illustrated embodiment, the connectors 26a, 26b and 326c of the prism support member 320 are offset relative to the path of the laser light as viewed in the Z direction perpendicular to the bottom face 121a, 123a or 322a.

The prisms 12a, 12c and 312b are fixedly coupled with each other. Specifically, as shown in FIG. 6, the prisms 12a, 12c and 312b are arranged with respect to each other along the path of the laser beam such that a part of one of the prisms 12a (12c or 312b) is disposed away from the path of the laser beam with respect to the side face 122c or 123c (121c) of the other one of the prisms 312b or 12c (212a) in the Y direction perpendicular to the path of the laser beam. Also, one of the connectors 26a (26b or 326c) is arranged with respect to the one of the prisms 12a (12c or 312b) such that the one of the connectors 26a (26b or 326c) at least partially overlaps with the part of the one of the prisms 12a (12c or 312b).

The rest of the configuration in the third embodiment is the same as in the first embodiment above.

The following effects can be obtained with the third embodiment.

As discussed above, in the third embodiment, the bottom faces 121a, 322a, and 123a of the prisms 12a, 312b, and 12c are welded to the connectors 26a, 326c, and 26b of the prism support member 320 at positions that are outside the path of laser light from the laser diodes 10a to 10c, respectively. This makes it less likely that temperature changes will cause deterioration of the optical characteristics of the prisms 12a, 312b, and 12c, just as in the first embodiment. Also, because of the prisms 12a, 312b, and 12c supported by the prism support member 320 are welded, the prisms 12a, 312b, and 12c can be supported more stably, making it even less likely that temperature changes will cause deterioration in the optical characteristics of the prisms 12a, 312b, and 12c.

The other effects of the third embodiment are the same as those in the first embodiment above.

The embodiments disclosed herein are just examples in every respect, and should not be interpreted as being limiting in nature. The scope of the invention being indicated by the appended claims rather than by the above description of the embodiments, all modifications within the meaning and range of equivalency of the claims are included.

For example, in the first to third embodiments above, the prisms are made of glass, but the present invention is not limited to this. The prisms can instead be made of plastic, or any other suitable material as needed and/or desired, for example.

Also, in the first to third embodiments above, the prism support member is made of plastic, but the present invention is not limited to this. The prism support member can instead be made of metal, or any other suitable material as needed and/or desired, for example.

Also, in the second embodiment above, the prisms and the prism support member are welded by the connectors near the top edges of the trapezoidal shape of the prisms, but the present invention is not limited to this. In the present invention, the welding can instead be at connectors near the bottom edges of the trapezoidal shape of the prisms.

Also, in the first to third embodiments above, the circular ring-shaped concave components are provided around the connectors of the prism support member, but the present invention is not limited to this. In the present invention, a tetragonal ring-shaped concave component can be provided, for example. Also, the concave component need not be ring-shaped. For instance, a plurality of tetragonal concave components can be provided around the connectors.

Also, in the first to third embodiments above, the prisms are triangular or tetragonal, but the present invention is not limited to this. In the present invention, the prisms can instead be in the form of pentagonal prisms. Also, the prisms can be formed in any shape so long as the laser light will be guided along the desired path, and they will be welded to the connectors at positions that are outside of the light path.

Also, in the first to third embodiments above, the laser diodes are used as the light source, but the present invention is not limited to this. LEDs (light-emitting diode) can instead be used as the light source in the present invention, for example.

Also, in the first to third embodiments above, the laser diode unit is applied to a projector, but the present invention is not limited to this. The present invention, for example, can be applied to a device other than a projector, in which a laser diode unit is installed.

The light source unit in accordance with the first aspect includes a light source component, at least one prism having a top face, a bottom face and a side face on which light from the light source component is incident, and guiding the light from the light source component along a light path, and a prism support member supporting the prism, the prism support member having a connector for connecting the prism, he bottom face of the prism and the connector of the prism support member being fixedly coupled together by welding such that the connector is located outside the path of light.

With the light source unit in accordance with the first aspect, as mentioned above, the bottom face of the prism and the connector of the prism support member located outside of the path of light from the light source component are welded together. This makes the position of the prism with respect to the prism support member less likely to be changed by a temperature change than when the prism and the prism support member are bonded together with an adhesive. Thus, deviation of the light guided by the prism from the desired direction can be suppressed. As a result, deterioration of the optical characteristics of the prism due to temperature changes can be suppressed. In particularly, since the prism is welded at its bottom face to the prism support member, there will be less change in the position of the prism with respect to the prism support member in a direction parallel to the bottom face of the prism. Specifically, there will be less change in the position of the side face of the prism where the light incidence face is provided. As a result, there will be less change in the light path caused by a change in the position of the light incidence face of the prism.

With the light source unit in accordance with the first aspect, the prism support member further has a concave component adjacent to the connector. With this configuration, since the concave component is provided near the connector of the prism support member, the concave component makes it less likely that the effect of thermal expansion during the welding of the connector of the prism support member will reach the area around the connector. As a result, there will be less change in the position of the prism with respect to the prism support member.

In this case, the concave component has a ring shape that surrounds the connector. With this configuration, since the ring-shaped concave component more uniformly keeps the effect of thermal expansion during the welding of the connector of the prism support member from reaching the area around the connector, there will be even less change in the position of the prism with respect to the prism support member.

With the light source unit in accordance with the first aspect, the prism has a polyhedral prism shape, and the connector of the prism support member is disposed near an apex of the polyhedral prism shape outside the light path. With this configuration, since the prism is welded near the apex of the polyhedral prism shape outside the light path, less of a region needs to be ensured for welding outside of the optical path.

In this case, the at least one prism includes a plurality of prisms, and the prism support member has a plurality of connectors. Each of the prisms has a triangular prism shape in which a bottom face thereof is a triangle. Each of the connectors of the prism support member is disposed near an apex of the bottom face that protrudes from a region where respective one of the prisms and the light path overlap with respect to each other. With this configuration, since the prisms are welded near the apexes of the triangles, the welding region of the prism outside of the optical path can be even smaller.

With the light source unit in accordance with the first aspect, at least one prism includes a plurality of prisms, and the prism support member has a plurality of connectors. Each of the prisms has a tetragonal prism shape in which a bottom face thereof is a trapezoid with upper and lower edges. Each of the connectors of the prism support member is disposed near the upper edge or the lower edge of the bottom face that protrudes from a region where respective one of the prisms and the light path overlap with respect to each other. With this configuration, since the prisms are welded near the upper or lower edge of the trapezoidal bottom faces, the welding region of the prisms left outside of the optical path can be smaller.

With the light source unit in accordance with the first aspect, the prism is made of glass, and the prism support member is made of plastic. With this configuration, the prism can be made from glass, which is well suited to optical parts. Also, the prism support member can be made from plastic, which is easy to mold.

The projector in accordance with a second aspect includes a light source unit and a scanner configured and arranged to scan the light from the light source unit. The light source unit includes a light source component, at least one prism having a top face, a bottom face and a side face on which light from the light source component is incident, and guiding the light from the light source component along a light path, and a prism support member supporting the prism, the prism support member having a connector for connecting the prism, the bottom face of the prism and the connector of the prism support member being fixedly coupled together by welding such that the connector is located outside the light path.

With the projector in accordance with the second aspect, as mentioned above, the bottom face of the prism is welded to the connector of the prism support member, which is located outside the light path from the light source component, and therefore the position of the prism with respect to the prism support member is less likely to vary along with temperature changes than when the prism and the prism support member are bonded together with an adhesive agent. Thus, the light guided by the prism will be less likely to deviate from the desired direction. As a result, temperature changes will cause less deterioration of the optical characteristics of the prism. In particular, since the prism is welded at its bottom face to the prism support member, there will be less change in the position of the prism with respect to the prism support member in a direction parallel to the bottom face of the prism. Specifically, there will be less change in the position of the side face of the prism where the light incidence face is provided. As a result, there will be less change in the light path caused by a change in the position of the light incidence face of the prism.

As discussed above, the present invention provides a light source unit and a projector with which there is less deterioration of the optical characteristics of a prism caused by changes in temperature.

In understanding the scope of the present invention, the term "comprising" and its derivatives, as used herein, are intended to be open ended terms that specify the presence of the stated features, elements, components, groups, integers, and/or steps, but do not exclude the presence of other unstated features, elements, components, groups, integers and/or steps. The foregoing also applies to words having similar meanings such as the terms, "including", "having" and their derivatives. Also, the terms "part," "section," "portion," "member" or "element" when used in the singular can have the dual meaning of a single part or a plurality of parts unless otherwise stated.

As used herein, the following directional terms "forward", "rearward", "front", "rear", "up", "down", "above", "below", "upward", "downward", "top", "bottom", "side", "vertical", "horizontal", "perpendicular" and "transverse" as well as any other similar directional terms refer to those directions of a laser diode unit or a projector in an upright position. Accordingly, these directional terms, as utilized to describe the laser diode unit or the projector should be interpreted relative to a laser diode unit or a projector in an upright position on a horizontal surface.

The term "attached" or "attaching", as used herein, encompasses configurations in which an element is directly secured to another element by affixing the element directly to the other element; configurations in which the element is indirectly secured to the other element by affixing the element to the intermediate member(s) which in turn are affixed to the other element; and configurations in which one element is integral with another element, i.e. one element is essentially part of the other element. This definition also applies to words of similar meaning, for example, "joined", "connected", "coupled", "mounted", "bonded", "fixed" and their derivatives.

While only selected embodiments have been chosen to illustrate the present invention, it will be apparent to those skilled in the art from this disclosure that various changes and modifications can be made herein without departing from the scope of the invention as defined in the appended claims. For example, unless specifically stated otherwise, the size, shape, location or orientation of the various components can be changed as needed and/or desired so long as the changes do not substantially affect their intended function. Unless specifically stated otherwise, components that are shown directly connected or contacting each other can have intermediate structures disposed between them so long as the changes do not substantially affect their intended function. The functions of one element can be performed by two, and vice versa unless specifically stated otherwise. The structures and functions of one embodiment can be adopted in another embodiment. It is not necessary for all advantages to be present in a particular embodiment at the same time. Every feature which is unique from the prior art, alone or in combination with other features, also should be considered a separate description of further inventions by the applicant, including the structural and/or functional concepts embodied by such feature(s). Thus, the foregoing descriptions of the embodiments according to the present invention are provided for illustration only, and not for the purpose of limiting the invention as defined by the appended claims and their equivalents.

## Claims

1. A light source unit comprising:
a light source component;
at least one prism having a top face, a bottom face and a side face on which light from the light source component is incident, and guiding the light from the light source component along a light path; and
a prism support member supporting the prism, the prism support member having a connector for connecting the prism,
the bottom face of the prism and the connector of the prism support member being fixedly coupled together by welding such that the connector is located outside the light path.

2. The light source unit according to claim 1, wherein
the prism support member further has a concave component adjacent to the connector.

3. The light source unit according to claim 2, wherein
the concave component has a ring shape that surrounds the connector.

4. The light source unit according to any one of claims 1 to 3, wherein
the prism has a polyhedral prism shape, and
the connector of the prism support member is disposed near an apex of the polyhedral prism shape outside the light path.

5. The light source unit according to any one of claims 1 to 4, wherein
the at least one prism includes a plurality of prisms, and the prism support member has a plurality of connectors,
each of the prisms having a triangular prism shape in which a bottom face thereof is a triangle,
each of the connectors of the prism support member being disposed near an apex of the bottom face that protrudes from a region where respective one of the prisms and the light path overlap with respect to each other.

6. The light source unit according to any one of claims 1 to 3, wherein
the at least one prism includes a plurality of prisms, and the prism support member has a plurality of connectors,
each of the prisms having a tetragonal prism shape in which a bottom face thereof is a trapezoid with upper and lower edges,
each of the connectors of the prism support member being disposed near the upper edge or the lower edge of the bottom face that protrudes from a region where respective one of the prisms and the light path overlap with respect to each other.

7. The light source unit according to any one of claims 1 to 6, wherein
the prism is made of glass, and
the prism support member is made of plastic.

8. The light source unit according to any one of claims 1 to 7, wherein
the connector of the prism support member is offset relative to the light path as viewed in a direction perpendicular to the bottom face.

9. The light source unit according to claim 6, wherein
the upper edge of the bottom face is shorter than the lower edge of the bottom face.

10. The light source unit according to claim 9, wherein
each of the prisms are oriented relative to the prism support member such that the upper and lower edges extend parallel to the light path.

11. The light source unit according to any one of claims 1 to 10, wherein
the at least one prism includes a plurality of prisms that are fixedly coupled to each other.

12. The light source unit according to any one of claims 1 to 11, wherein
the at least one prism includes a plurality of prisms, the prisms being arranged with respect to each other along the light path such that a part of one of the prisms is disposed away from the light path with respect to a side face of the other one of the prisms in a direction perpendicular to the light path.

13. The light source unit according to any one of claims 1 to 12, wherein
the prism support member has a plurality of connectors, one of the connectors being arranged with respect to the one of the prisms such that the one of the connectors at least partially overlaps with the part of the one of the prisms.

14. A projector comprising:
the light source unit according to any one of claims 1 to 13; and
a scanner configured and arranged to scan the light from the light source unit.
